(19) Europäisches Patentamt

European Patent Office

Office européen des brevets

(11) Publication number: **0 273 896**
**A2**

(12) **EUROPEAN PATENT APPLICATION**

(21) Application number: **87870205.9**

(22) Date of filing: **29.12.87**

(51) Int. Cl.⁴: **B 29 C 49/00**

(30) Priority: **30.12.86 GB 8631015**

(43) Date of publication of application:
**06.07.88 Bulletin 88/27**

(84) Designated Contracting States:
**AT BE CH DE ES FR GB GR IT LI LU NL SE**

(71) Applicant: **Monsanto Europe S.A.**
**Avenue de Tervuren 270-272 Letter Box 1**
**B-1150 Brussels (BE)**

(72) Inventor: **Dufour, Daniel Louis**
**Avenue des Statuaires 109**
**B-1180 Bruxelles (BE)**

**Pierre, Jean R.**
**Rue des Trois Bonniers 13**
**B-5851 Saint Denis (BE)**

**Mayrhofer, Peter**
**Snijdersdreef 19**
**B-1900 Overijse (BE)**

(74) Representative: **McLean, Peter et al**
**Monsanto Europe S.A. Patent Department Avenue de Tervuren 270-272 Letter Box No 1**
**B-1150 Brussels (BE)**

(54) **Production of hollow articles.**

(57) Transparent hollow articles are blow-moulded from a composition comprising polyethylene terephthalate and styrene maleic anhydride copolymer (SMA), using a preform maintained at above the transition temperature of the SMA.

EP 0 273 896 A2

Bundesdruckerei Berlin

## Description

## PRODUCTION OF HOLLOW ARTICLES

This invention relates to the production of hollow articles, and more particularly to the production of such articles that are substantially transparent.

The production of hollow articles, such as containers for example, by blow-moulding a thermoplastic resin composition is well known. Such resins as polyethylene or polyvinyl chloride have been traditionally used for this purpose but more recently polyesters such as polyethylene terephthalate (PET) have been introduced, particularly for the production of bottles for carbonated beverages and other liquids. While polyethylene terephthalate containers are eminently suitable for use at ordinary temperatures, they need to be annealed before they can be filled with hot materials or subjected to pasteurisation temperatures. Annealing reduces the production rate and introduces extra costs, and may not be sufficient to give the required heat resistance. Another obstacle to the wider use of polyethylene terephthalate in blow-moulding hollow articles is the extreme difficulty hitherto, of using an extrusion-blow-moulding technique rather than that of injection blow-moulding. The former is a faster process in that a tube of resin is continuously extruded and divided into preforms (parisons) that are then blown in a mould, whereas in the latter process the parisons are made in a separate step by injection-moulding. Up to now, one could not extrusion-blow-mould polyethylene terephthalate because of its low melt-strength. Accordingly, polyethylene terephthalate has, as a practical matter, been blow-moulded by the injection-blow-moulding route.

EP-B-0,042,724 (Ethyl Corporation) describes a thermoplastic moulding composition which comprises, in intimate admixture: (a) a polyethylene terephthalate and (b) a copolymer of a vinyl aromatic compound and an alpha, beta-unsaturated cyclic anhydride, said composition having a heat deflection temperature of about 84°C or above at 1.82 MPa as measured by ASTM D 648-72.

GB-A-2076832 (Celanese Corporation) describes blends of polyethylene terephthalate based polyesters and styrene maleic anhydride copolymers in a weight ratio of 99:1 to 50:50, which are stated to exhibit improved mouldability and improved adhesive properties to a variety of substrates. Specifically, lower mould temperatures can be employed when injection moulding the blends.

Neither of the above two specifications mentions blow-moulding of hollow articles.

Whilst it might have been thought that a blend or composition according to the above Ethyl Corporation specification might be used to give more heat-resistant hollow articles if blow-moulded, in fact we found on testing that the resulting articles lacked the transparency necessary for most applications such as bottles, jars and similar containers. This problem was most marked when using a chilled mould to make an injection-moulded preform. Such chilling has hitherto been necessary in order to prevent crystallisation of PET preforms because, once crystallisation has occurred, PET preforms cannot be blown.

We found, surprisingly, that transparent blow-moulded hollow articles can be in fact made from such compositions if the preform is maintained at a relatively high temperature from the time it is made until the time it is blown into the article, so that crystallisation of the preform is prevented in this way rather than by chilling the preform mould. Moreover, we found that extrusion-blow-moulding can be employed with these compositions (even though it cannot with polyethylene terephthalate itself) and is very suitable for a process in accordance with this invention.

The process of this invention is one for producing a blow-moulded hollow article from a polyester composition in which a preform is made and thereafter expanded by means of differential fluid pressure into contact with a hollow mould of shape corresponding to that of the desired article, characterised in that (a) the polyester composition comprises polyethylene terephthalate (PET) and a styrene maleic anhydride copolymer (SMA) in a weight ratio of from 10 to 50 parts of SMA per hundred parts of (SMA + PET) and (b) the preform is maintained at between 180 and 250°C substantially to prevent it from crystallising before it is expanded, whereby (c) the hollow article is substantially transparent.

The invention also comprises a blow-moulded hollow article made from a polyester composition characterised in that (a) the composition comprises polyethylene terephthalate (PET) and a styrene maleic anhydride copolymer (SMA) in a weight ratio of from 10 to 50 parts of SMA per hundred parts of (SMA + PET) and (b) the article is substantially transparent.

Preferably, the article is capable of being filled with a liquid at a temperature of 75 to 110°C without deformation.

The PET can be any of the PET resins sold for blow-moulding. Suitable examples are for example described in US-A-4,483,949 "Glycol modified PET" (PETG) can be used if desired; this contains blocks of polyether within the polymer molecule.

The SMA preferably contains from 10 to 30% by weight of maleic anhydride, based on the weight of the SMA. A preferred proportion is from 15 to 30% by weight. An additonal copolymerised monomer, for example methyl methacrylate (MMA), can be present if desired, and the proportion of such additional monomer can usefully be adjusted so that the SMA has substantially the same refractive index as the PET, for it has been found that a difference in refractive index can cause the formation of a slight haziness in the final article. For example, the refractive index of SMA containing 75% of styrene, and 25% of maleic anhydride by weight together with from 0 to 7% of MMA (by weight of the total SMA), changes from 1.575 to 1.57 as the proportion of MMA is increased over the range 0% to 7%. For use with a PET having refractive index 1.575. a proportion of MMA of below 2% by weight would thus be appropriate in order to achieve maximum transparency in this particular example. The styrene can be wholly or partly replaced by a derivative of styrene such as alpha-methylstyrene, vinyltoluene or a halostyrene.

Rubber-modification of the SMA leads to a great reduction in the transparency of the hollow article and is not desirable.

The amount of SMA in the polyester composition is preferably from 10 to 40% of the composition, more preferably from 15 to 30%, by weight.

The components of the composition can be blended together by any convenient method, for example by extrusion blending or by dry blending of particles. Additives such as colouring agents, antioxidants or lubricants can be incorporated.

In carrying out the blow moulding process it is important to blow the preform at a temperature above the transition temperature of SMA (Tg) in order to maintain the clarity. If the blowing process occurs below the Tg of SMA the hollow article is white. The Tg for SMA with maleic anhydride within the preferred range, varies from 120°C to 170°C. The maximum crystallisation rate of PET is between 100°C and 230°C with the peak around 165°C. In order to prevent the preform from crystallising before it is blown it is important to keep the preform the shortest time possible at a temperature between 230°C and the blowing temperature (above SMA Tg).

Where the preform is injection moulded, the mould should not be chilled, a mould temperature of 20 to 40°C often being suitable. The preform can be maintained at the necessary temperature by any convenient means; for example by effecting so rapid a transfer from the mould to the place where it is blown that it does not have time to cool below SMA Tg, or by heating (for example by infra-red radiation) during such transfer. One such method uses an injection blow-moulding machine having a carousel for effecting the transfer and infra-red lamps to heat the preforms. Conventionally such lamps are employed to reheat preforms of PET (i.e., without SMA) made using a chilled mould. However, it has to be recognized that, keeping the preform for a long time at those temperature will induce crystallization. According to one aspect of our invention, the preform of PET/SMA issues from a non-chilled mould and never cools down sufficiently to be below SMA Tg, as we have found it does do with a chilled mould

It is a feature of our invention that an extrusion-blow-moulding process can be employed. As explained above, this has hitherto been very difficult if not impossible with PET. In an extrusion-blow-moulding the time between extrusion of the preform and blowing is very short and maintenance of the correct temperature to prevent crystallisation is readily achieved. No special precautions are necessary.

The process of the invention is particularly useful where a stretch-blow-moulding technique is employed; here a plunger pushes the preform into a more elongated shape before it is blown, whereby biaxial orientation and more uniform wall thickness can result. In its extreme form, stretch-blow-moulding employs a preform that is substantially flat, for example a disc stamped from a sheet, that is then pushed into a hollow shape by means of a plunger. In adapting this process for the present invention, one would extrude or cast a sheet and maintain it within the stated temperature range whilst the above operations were performed.

It is found that articles, for example bottles, have a light transmission ("transparency") of at least 50%. Very often, a transparency of 70% or more is achieved, while from 60% to 70% is most usual. The articles can be filled with hot liquids without significant deformation, and for example hot water at 80 to 85°C can be poured into a bottle of 1 litre capacity and weighing 35 g, without any observable effects.

Articles according to the invention are useful as containers, for example, particularly for hot-filled or pasteurisable contents. However, they are also useful as parts for household fittings such as lighting fittings, toys, ornaments and so on.

The invention is illustrated by the following Example:-

## EXAMPLE

One step injection blow moulding of 250ml bottles from dry blends of PET/SMA.

Dry blends of 80% PER Arnite D04-300 (intrinsic viscosity 0.85) from Akzo Chemie with 20% SMA terpolymer at 25% MA were prepared just before injection moulding. The PET was received from Akzo in sealed bags ready to use while the SMA was dried for 3 hours at 70°C in a Somos hopper dier.

The blends were injected in a one step injection blow moulding machine Bekum SBM 315 E30. In this machine, the containers are produced in three stages :

1. a preform is produced in the injection mould
2. the preform is blown up into the finished article in a blow mould
3. the finished part is stripped off the core and ejected.

All three phases take place simultaneously on a horizontal rotary table in working stations located at a mutual angle of 120°C.

The blend was injected using the following conditions :

Barrel temperatures : Z1 = 270, Z2 = 270, Z3 = 280, Z4 = 280(°C)
Nozzle temperature : 290°C
Preform mould temperature : 10 to 25°C.
Core uncooled (no cooling air).
Bottle mould temperature : 35°C
Injection time + cooling time : 3.5 seconds (4 bottles per minute)
Melt temperature : 260°C

The bottles obtained were transparent in the body and the neck. They could be filled with water at 85°C without deformation.

## Claims

1. A process for producing a blow-moulded hollow article from a polyester composition, in which a preform is made and thereafter expanded by means of differential fluid pressure into contact with a hollow mould of shape corresponding to that of the desired article, characterised in that (a) the polyester composition comprises polyethylene terephthalate (PET) and a styrene maleic anhydride copolymer (SMA) in a weight ratio of from 10 to 50 parts of SMA per hundred parts of (SMA + PET) and (b) the preform is maintained at a temperature above the transition temperature of SMA before it is expanded, whereby (c) the hollow article is substantially transparent.

2. A process of Claim 1 where the preform is a section of an extruded tube.

3. A process of Claim 1, wherein the preform is injection-moulded, the mould used in the injection-moulding step being maintained at between 20°C and 50°C.

4. A process of any of the preceding claims, wherein the composition contains form 15% to 30% by weight of SMA per hundred parts by weight of (SMA + PET).

5. A process of any of the preceding claims, wherein the SMA contains from 15 to 30% by weight of maleic anhydride.

6. A process of any of the preceding claims, wherein the SMA contains an additional comonomer in an amount so as to alter the refractive index of the SMA to approximate to that of the PET and thus further improve transparency of the resulting container walls.

7. A blow-moulded hollow article made from a polyester composition characterised in that (a) the composition comprises polyethylene terephthalate (PET) and a styrene maleic anhydride copolymer (SMA) in a weight ratio of from 10 to 50 parts of SMA per hundred parts of (SMA + PET) and (b) the article is substantially transparent.

8. An article of Claim 7, being a container that has been filled with a liquid at a temperature from 75 to 110°C.

9. An article according to Claim 7 or Claim 8, wherein the composition is as defined in any of Claims 4 to 6.